# FASCICULE DE BREVET EUROPEEN

(11) **EP 3 340 387 B1**
(45) Date de publication et mention de la délivrance du brevet: **15.04.2020**
(21) Numéro de dépôt: 17203945.5
(22) Date de dépôt: 28.11.2017
(51) Int. Cl.: H01R 4/44, B60M 1/24

(54) **GRIFFE DE CONNEXION D'AU MOINS DEUX CABLES COMPORTANT DES EMPREINTES DEFORMABLES**
SCHUH ZUM ANSCHLIESSEN VON MINDESTENS ZWEI KABELN, DER VERFORMBARE PRÄGUNGEN UMFASST
CLAW FOR CONNECTING AT LEAST TWO CABLES COMPRISING DEFORMABLE IMPRESSIONS

(30) Priorité: 21.12.2016 FR 1663070
(43) Date de publication de la demande: 27.06.2018
(73) Titulaire: SNCF RESEAU, 93418 La Plaine Saint-Denis CEDEX (FR)
(72) Inventeur: KALONJI, Cédric, 95150 Taverny (FR); MASSAT, Jean-Pierre, 77360 Vaires-sur-Marne (FR); BERTRAND, David, 92260 Fontenay-aux-Roses (FR); CADENET, Pascal, 94260 Fresnes (FR)
(74) Mandataire: Argyma

(56) Documents cités:
- CN-U- 204 614 984
- DE-A1- 3 010 953
- FR-A1- 3 015 137
- US-A- 4 764 131
- US-B1- 7 182 653

## Description

### DOMAINE TECHNIQUE GENERAL ET ART ANTERIEUR

La présente invention concerne le domaine de la connexion de câbles, en particulier, dans le domaine ferroviaire. Par câble, on entend, dans la présente invention, aussi bien un ensemble de fils, protégé ou non par une gaine, qu'un unique fil qui peut être rainuré, tel qu'un fil de contact constitutif d'une caténaire, ou rond, tel qu'un porteur auxiliaire constitutif d'une caténaire.

A titre d'exemple, pour permettre la liaison électrique de deux câbles ou le rapprochement parallèle d'un câble par rapport à un autre câble, il est connu d'utiliser une griffe de connexion.

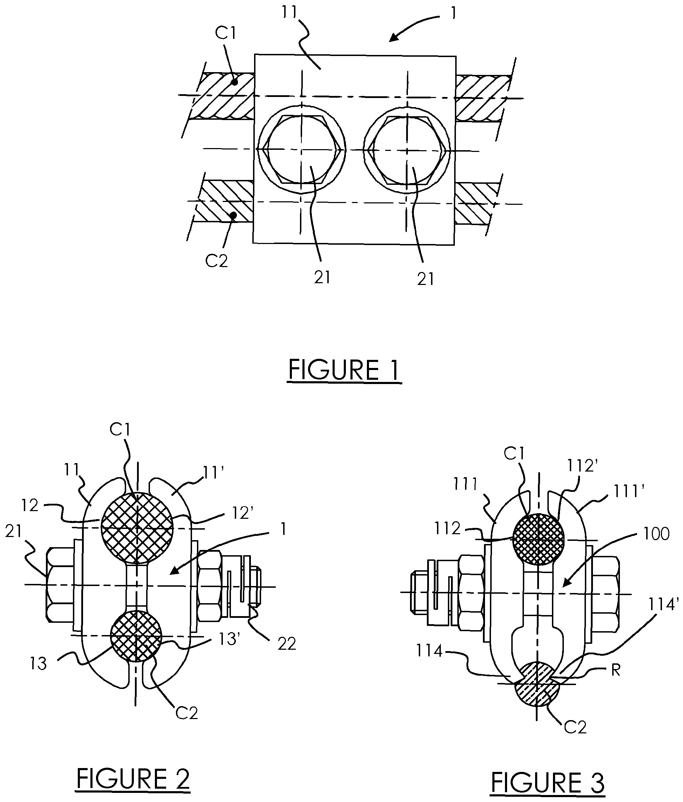

En référence aux figures 1 et 2, une griffe de connexion 1 comporte de manière ordinaire deux mâchoires 11, 11' adaptées pour bloquer entre elles deux câbles longitudinaux C1, C2. Afin d'assurer une connexion stable, chaque mâchoire 11, 11' comporte deux empreintes longitudinales 12, 12', 13, 13' adaptées pour épouser respectivement la forme des deux câbles longitudinaux C1, C2 comme illustré à la figure 2. De manière connue, chaque mâchoire 11, 11' comporte un orifice traversant (non représenté) de section circulaire adapté pour permettre le passage d'une vis de liaison 21 à travers les deux mâchoires. Un écrou 22 est monté à l'extrémité de la vis de liaison 21 afin de solidariser ensemble les deux mâchoires 11, 11' et les câbles longitudinaux C1, C2. Ainsi, la griffe de connexion 1 permet de définir de manière précise la position relative d'un premier câble C1 par rapport à un deuxième câble C2. Lorsque la griffe de connexion 1 est réalisée dans un matériau conducteur, les câbles C1, C2 sont connectés électriquement.

Etant donné que les câbles peuvent posséder des diamètres différents, il est nécessaire de prévoir des griffes de connexion dont les mâchoires possèdent diverses formes d'empreintes pour épouser au mieux la forme des câbles. De même, lorsqu'un câble comporte une rainure longitudinale, il est nécessaire de prévoir des mâchoires comportant une tête de connexion adaptée pour coopérer avec la rainure du câble.

En référence à la figure 3 représentant un autre type de griffe de connexion 100, la griffe de connexion 100 comporte deux mâchoires 111, 111' comportant chacune une unique empreinte 112, 112' pour recevoir le premier câble C1 et une unique tête de connexion 114, 114' pour bloquer le deuxième câble rainuré C2 en coopérant avec sa rainure R. Autrement dit, la griffe de connexion 100 n'est pas adaptée pour connecter deux câbles C1, C2 non rainurés, c'est-à-dire, des câbles dont la section est de forme circulaire.

Compte tenu de la variété de câbles (différents diamètres, présence ou absence de rainures, etc.) susceptibles de devoir être connectés, il est nécessaire de disposer d'une grande variété de mâchoires, ce qui présente un inconvénient sur le plan logistique et augmente le coût de fabrication de l'ensemble des griffes de connexion nécessaires pour connecter ensemble des câbles de types différents.

De plus, le serrage des mâchoires est complexe à réaliser étant donné qu'il est nécessaire de maintenir les mâchoires parallèles afin d'obtenir une pression uniforme sur les câbles. Aussi, compte tenu de la variété de câbles, un serrage uniforme de la griffe de connexion est difficile à garantir, ce qui présente un inconvénient. Un tel serrage uniforme est d'autant plus difficile à garantir que les câbles se déforment de manière différente au cours du serrage et du fait de leur élasticité.

Compte tenu de leur spécificité, les mâchoires sont réalisées par moulage, ce qui augmente leur masse. Il en résulte la formation d'un « point dur» lors du passage d'un pantographe sur un des câbles au niveau de la griffe de connexion, en particulier lorsque l'un des câbles est rainuré, ce qui fragilise le câble rainuré dans la zone de connexion et diminue sa durée de vie. De manière incidente, on connaît par la demande de brevet FR3015137A1 une griffe dont les mâchoires sont adaptées pour s'incliner lors du serrage.
Le document DE3010953A1 décrit une griffe de connexion d'au moins deux câbles comportant une première mâchoire, une deuxième mâchoire et au moins une tige de liaison, s'étendant selon un axe, adaptée pour serrer lesdites mâchoires en vis-à-vis autour desdits câbles, chaque mâchoire comportant au moins deux empreintes de réception adaptées pour coopérer avec lesdits câbles dans laquelle au une empreinte de réception d'une mâchoire est configurée pour se déformer lors du serrage desdites mâchoires autour desdits câbles et dans laquelle une mâchoire comporte un corps principal et que ladite empreinte de réception déformable est reliée audit corps principal par des moyens d'écartement de manière à ménager un jeu d'écartement entre ladite empreinte de réception déformable et ledit corps principal. Ce document ne décrit pas deux mâchoires identiques comportant chacune une empreinte de réception déformable.

L'invention a donc pour but de remédier à ces inconvénients en proposant une griffe de connexion universelle apte à connecter des câbles de différents types et à permettre un serrage uniforme tout en permettant de répondre aux exigences de connexions électriques.

### PRESENTATION GENERALE DE L'INVENTION

A cet effet, l'invention concerne une griffe de connexion d'au moins deux câbles, telle que décrite dans la revendication indépendante 1, comportant une première mâchoire, une deuxième mâchoire et au moins une tige de liaison, s'étendant selon un axe X1, adaptée pour serrer lesdites mâchoires en vis-à-vis autour desdits câbles, chaque mâchoire comportant au moins deux empreintes de réception adaptées pour coopérer avec lesdits câbles et au moins une ouverture traversante, s'étendant selon l'axe X1, pour permettre le passage de ladite tige de liaison.

L'invention est remarquable en ce qu'au moins une empreinte de réception d'une mâchoire est configurée pour se déformer lors du serrage desdites mâchoires autour desdits câbles.

La déformation de l'empreinte de réception permet avantageusement d'épouser la forme extérieure du câble et, ce, indépendamment de son diamètre. Il en résulte que le câble est reçu de manière intime dans l'empreinte, ce qui limite tout jeu de fonctionnement susceptible d'entraîner un desserrage au cours du temps. De manière avantageuse, une même griffe de connexion peut ainsi connecter des câbles de différents diamètres. Il n'est plus nécessaire de recourir à des griffes de connexion particulières en fonction du diamètre des câbles. Une telle griffe de connexion universelle peut être produite à échelle industrielle, ce qui diminue son coût.

De préférence, ladite empreinte de réception est configurée pour se déformer plastiquement lors du serrage desdites mâchoires autour desdits câbles. Une déformation plastique permet d'éviter que l'empreinte n'exerce un effort sur le câble après serrage, augmentant ainsi la durée de vie du câble et de la griffe de connexion.

Chaque mâchoire comporte un corps principal et ladite empreinte de réception déformable est reliée audit corps principal par des moyens d'écartement de manière à ménager un jeu d'écartement entre ladite empreinte de réception déformable et ledit corps principal. Ainsi, ladite empreinte de réception peut se déplacer librement vers le corps principal lors de sa déformation, ce qui est avantageux.

De préférence, l'empreinte déformable se présente sous la forme d'une paroi de contact dont l'épaisseur est comprise entre 0,5 mm et 5 mm. Une telle paroi de contact fine permet de se déformer de manière optimale lors du serrage d'une griffe de connexion pour épouser la forme du câble serré.

De manière préférée, chaque mâchoire comporte un organe d'appui et lesdits organes d'appui sont configurés pour entrer en butée l'un contre l'autre lors du serrage desdites mâchoires autour desdits câbles. De tels organes d'appui permettent avantageusement de limiter la déformation des empreintes de réception afin d'assurer un serrage homogène de chaque câble.

De préférence, l'ouverture traversante d'une mâchoire s'étend dans l'organe d'appui de ladite mâchoire. Ainsi, l'effort de serrage est contrôlé par les organes d'appui.

Les deux empreintes de réception de chaque mâchoire sont configurées pour se déformer lors du serrage desdites mâchoires autour desdits câbles. Chaque câble est ainsi reçu dans deux empreintes déformables qui permettent de le maintenir de manière intime, indépendamment de son diamètre.

Selon un aspect de l'invention, chaque mâchoire comporte au moins un organe de blocage adapté pour coopérer avec une rainure d'un câble. La griffe de connexion est universelle et s'adapte à tout type de câble. De préférence, l'organe de blocage est positionné à une extrémité d'une mâchoire.

De préférence, la première mâchoire et la deuxième mâchoire sont identiques, ce qui permet de diminuer le coût de fabrication de la griffe de connexion par économie d'échelle tout en préservant un serrage uniforme.

Selon un aspect de l'invention, la mâchoire est réalisée par matriçage afin de limiter sa masse. Une telle mâchoire de masse limitée possède des propriétés mécaniques améliorées. Une telle griffe de liaison permet de limiter les « points durs» lors de la circulation d'un pantographe sous un des câbles, en particulier, un fil rainuré connu de l'homme de métier sous la désignation de «fil de contact». Selon un autre aspect de l'invention, chaque mâchoire est réalisée par extrusion.

De préférence, la tige de liaison est boulonnée afin de réaliser un serrage axial optimal.

De manière avantageuse, chaque empreinte est apte à conduire l'électricité. De préférence, chaque empreinte est réalisée en un alliage à base de cuivre.

De manière préférée, la griffe de connexion comporte des moyens d'alerte visuelle configurés pour alerter visuellement un opérateur en cas de desserrage de la griffe de connexion.

L'invention concerne également un ensemble d'une griffe de connexion telle que présentée précédemment et de deux câbles, les câbles étant serrés entre les deux mâchoires, au moins une empreinte de réception d'au moins une mâchoire étant déformée par la réception d'un câble.

L'invention concerne en outre un procédé de connexion d'au moins deux câbles au moyen d'une griffe de connexion telle que présentée précédemment, le procédé comportant :
- une étape de positionnement des câbles entre les mâchoires, au moins un premier câble étant positionné entre une empreinte de réception de chaque mâchoire,
- une étape de serrage desdites mâchoires selon un axe de manière à déformer au moins une empreinte de réception autour dudit premier câble.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue de face d'une griffe de connexion selon l'art antérieur connectant deux câbles (déjà présentée) ;
- la figure 2 est une vue en coupe latérale de la griffe de connexion de la figure 1 (déjà présentée) ;
- la figure 3 est une vue en coupe latérale d'une griffe de connexion selon l'art antérieur connectant un câble rainuré (déjà présentée) ;
- la figure 4 est une représentation en perspective d'une griffe de connexion selon l'invention lors de la connexion de deux câbles ;
- la figure 5 est une représentation de face de la griffe de connexion de la figure 4 sans les câbles ;
- la figure 6 est une représentation de face d'une mâchoire de la griffe de connexion de la figure 5 ; et
- la figure 7 est une représentation schématique de face de la griffe de connexion de la figure 4 lors de la connexion de deux câbles.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

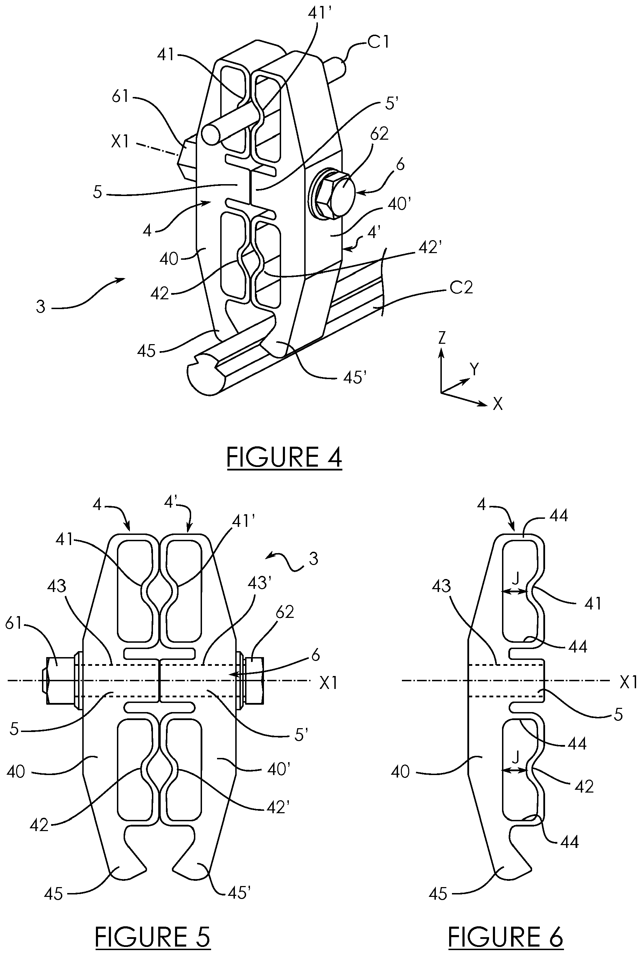

Une griffe de connexion 3 selon l'invention va être présentée en référence aux figures 4 à 7 pour la connexion de deux câbles C1, C2 de différentes natures (sections différentes, présence ou non de rainures longitudinales). La griffe de connexion 3 pourrait connecter plus de deux câbles.

Par la suite, on entend par câble aussi bien un câble de grand diamètre qu'un câble de petit diamètre. De même, par câble, on entend aussi bien un câble rainuré qu'un câble non rainuré.

En référence à la figure 4, selon une forme de réalisation de l'invention, la griffe de connexion 3 comporte une première mâchoire 4, une deuxième mâchoire 4' et au moins une tige axiale de liaison 6 adaptée pour serrer lesdites mâchoires 4, 4' en vis-à-vis autour desdits câbles C1, C2.

Dans cet exemple, la tige de liaison 6 comporte un corps longitudinal de section circulaire dont une première extrémité comporte une tête de serrage 61 et dont une deuxième extrémité comporte une portion filetée (non représentée). La portion filetée de la tige de liaison 6 est adaptée pour coopérer avec un écrou 62 afin de former une liaison boulonnée pour serrer les mâchoires 4, 4'. La tige de liaison 6 s'étend axialement selon un axe X1 dans les mâchoires 4, 4'.

Dans cette forme de réalisation, les deux mâchoires 4, 4' sont identiques, ce qui facilite la logistique et la maintenance. Aussi, par souci de clarté et de concision, seule la première mâchoire 4 sera présentée par la suite.

Par la suite, en référence à la figure 4, la première mâchoire 4 est décrite dans le repère orthogonal X, Y, Z dans lequel l'axe X correspond à l'axe de serrage, l'axe Y correspond à l'axe latéral selon lequel s'étendent les câbles C1, C2 et l'axe Z correspond à l'axe vertical, l'axe vertical Z s'étendant du bas vers le haut sur les figures.

La première mâchoire 4 comporte une face intérieure destinée à venir en contact avec les câbles C1, C2 et une face extérieure opposée à la face intérieure.

En référence à la figure 6, la première mâchoire 4 comporte un corps principal 40 s'étendant verticalement. La première mâchoire 4 comporte sur sa face intérieure deux empreintes de réception 41, 42 qui s'étendent latéralement selon l'axe Y et qui sont décalées verticalement selon l'axe Z. Autrement dit, la première mâchoire 4 comporte une empreinte de réception supérieure 41 et une empreinte de réception inférieure 42.

De manière préférée, la longueur verticale d'une mâchoire 4 est comprise entre 30 mm et 80 mm selon l'axe Z. La largeur d'une mâchoire 4 selon l'axe Y est définie en fonction de sa longueur selon l'axe Z et de l'intensité du courant circulant dans les câbles C1, C2.

Dans cette forme de réalisation, en référence à la figure 6, chaque empreinte de réception 41, 42 est reliée audit corps principal 40 par des moyens d'écartement de manière à ménager un jeu d'écartement J entre ladite empreinte de réception 41, 42 et ledit corps principal 40.

Comme illustré à la figure 6, chaque empreinte de réception 41, 42 se présente sous la forme d'une paroi de contact sensiblement verticale qui est reliée au corps principal 40 par deux parois d'écartement 44 s'étendant parallèlement à l'axe X. Autrement dit, la première mâchoire 4 comporte deux alvéoles de manière à permettre la déformation de chaque empreinte longitudinale de réception 41, 42 lors du serrage. Le jeu d'écartement J permet avantageusement à une empreinte de réception 41, 42 de se rapprocher du corps principal 40 afin d'épouser la forme d'un câble de grand diamètre. Chaque empreinte 41, 42 est concave de manière à recevoir un câble C1, C2 dans sa cavité pour immobiliser sa position. A cet effet, chaque empreinte 41, 42 possède, de préférence, une section curviligne. Ainsi, chaque câble C1, C2 à connecter peut être positionné dans le fond de la cavité d'une empreinte 41, 42. Comme indiqué précédemment, chaque empreinte de réception 41, 42 se présente sous la forme d'une paroi de contact qui est écartée du corps principal 40 par un jeu d'écartement J compris entre 1,5 mm et 15 mm. L'épaisseur de la paroi de contact est comprise entre 0,5 mm et 5 mm de manière à pouvoir se déformer lors du serrage d'un câble C1, C2 et ainsi épouser la forme de la surface extérieure dudit câble C1, C2. La longueur verticale de la paroi de contact est comprise entre 20 mm et 70 mm afin de permettre à la paroi de contact d'épouser la moitié de la circonférence d'un câble C1, C2 de grand diamètre.

En pratique, chaque empreinte 41, 42 peut accueillir des câbles dont les diamètres sont compris entre 7 mm et plus de 21 mm. L'empreinte supérieure 41 et l'empreinte inférieure 42 sont identiques et permettent chacune d'accueillir tout câble C1, C2, indépendamment de son diamètre.

En référence à la figure 6, la première mâchoire 4 comporte une ouverture traversante 43 s'étendant axialement selon un axe X1 pour permettre le passage de la tige de liaison 6. Dans cet exemple, la première mâchoire 4 comporte un organe d'appui 5 s'étendant, du côté de la face intérieure, en saillie selon l'axe X1 dudit corps principal 40. Lors du serrage des mâchoires 4, 4' autour desdits câbles C1, C2, les organes d'appui 5, 5' des mâchoires 4, 4' sont configurés pour entrer en butée l'un contre l'autre de manière à limiter le rapprochement des mâchoires 4, 4' et, par voie de conséquence, la déformation des empreintes de réception 41, 42, 41', 42' comme cela sera présenté par la suite.

En référence à la figure 5, lorsque les mâchoires 4, 4' sont serrées, l'espace entre les empreintes supérieures 41, 41' et l'espace entre les empreintes inférieures 42, 42' est réduit, en particulier, inférieur à 7 mm. Autrement dit, lors de la réception d'un câble C1, C2 dont le diamètre est supérieur à 7 mm, les empreintes 41, 42, 41', 42' se déforment.

Toujours en référence à la figure 5, la première mâchoire 4 comporte une ouverture traversante 43 s'étendant selon l'axe X1 pour permettre le passage de ladite tige de liaison 6. Dans cette forme de réalisation, l'ouverture traversante 43 de la première mâchoire 4 s'étend dans l'organe d'appui 5 de ladite première mâchoire 4. Ainsi, le serrage est réalisé de manière centrale au niveau des organes d'appui 5, ce qui favorise une mise en butée précise et une répartition des efforts de serrage.

De manière préférée, l'organe d'appui 5 s'étend entre l'empreinte supérieure de réception 41 et l'empreinte inférieure de réception 42, de préférence, à égale distance. Ainsi, l'effort de serrage appliqué au niveau des empreintes 41, 41', 42, 42' est sensiblement identique, ce qui permet une connexion optimale au cours du temps.

De manière préférée, en référence à la figure 6, la première mâchoire 4 comporte, à son extrémité inférieure, un organe de blocage 45 adapté pour coopérer avec une rainure d'un câble rainuré C2. Dans cet exemple, l'organe de blocage 45 est distant des empreintes 41, 42 et formé à l'extrémité inférieure du corps principal 40 de la première mâchoire 4. Comme illustré à la figure 6, l'organe de blocage 45 se présente sous la forme d'une portion en saillie, de préférence, de section triangulaire afin de coopérer par complémentarité de formes avec la rainure d'un câble C2. Ainsi, un câble C1, C2 peut être logé dans une empreinte de réception 41, 42 ou immobilisé par un élément de blocage 45. La griffe de connexion 3 est universelle et peut connecter des câbles C1, C2 de différentes natures. Il va de soi que chaque extrémité de la première mâchoire 4 pourrait comprendre un organe de blocage 45 afin de coopérer avec deux câbles rainurés.

Dans cet exemple, la première mâchoire 4 est obtenue par matriçage afin de lui imprimer une forme tridimensionnelle. Une telle mâchoire 4 possède une masse réduite par comparaison à une mâchoire obtenue par moulage, ce qui diminue les points durs lors du passage d'un pantographe sous un des câbles C1, C2 au niveau de la griffe de connexion 3. En outre, une première mâchoire 4 obtenue par matriçage possède des propriétés mécaniques améliorées. En effet, un matriçage va écrouir le métal et va de ce fait améliorer sa résistance à la rupture par comparaison à un moulage du même type de matériau. Pour obtenir la même résistance à la rupture, il serait nécessaire d'employer un métal de composition chimique complexe et dont le coût est élevé. Néanmoins, Il va de soi que la première mâchoire 4 pourrait également être obtenue par extrusion.

De manière préférée, la première mâchoire 4 est formée d'une seule pièce afin de limiter les coûts de fabrication et d'assemblage. Néanmoins, il va de soi qu'elle pourrait également comprendre plusieurs pièces assemblées ensemble.

De préférence, la conductivité électrique de la matière des empreintes 41, 41', 42, 42' est au moins égale à 35% de la conductivité du cuivre pur, la conductivité électrique du cuivre étant de 59,6 S.m-1. De manière préférée, la matière des empreintes 41, 41', 42, 42' possède un couple électrochimique favorable par comparaison à la matière des câbles C1, C2 à connecter. De préférence encore, la matière de la mâchoire 4 résiste à la corrosion de manière à éviter toute dégradation environnementale.

De manière avantageuse, chaque empreinte 41, 41', 42, 42' se déforme de manière plastique lors du serrage afin d'épouser la forme du câble C1, C2 qui est serré, ce qui limite avantageusement tout jeu de fonctionnement entre la griffe de connexion 3 et ledit câble C1, C2.

Un premier exemple de mise en œuvre de l'invention est présenté en référence à la figure 4 pour la connexion d'un premier câble C1 de petit diamètre et dépourvu de rainure longitudinale et d'un deuxième câble C2 de grand diamètre et pourvu de rainure longitudinale. Les câbles C1, C2 appartiennent à une caténaire ferroviaire et doivent être reliés physiquement et électriquement par la griffe de connexion 3.

Avant de procéder à la connexion de deux câbles C1, C2, la griffe de connexion 3 est préassemblée. A cet effet, la tige de liaison 6 traverse successivement l'orifice traversant 43 de la première mâchoire 4 et l'orifice traversant 43' de la deuxième mâchoire 4'. L'écrou de serrage 62 est partiellement vissé à l'extrémité filetée de la tige de liaison 6 de manière à autoriser un jeu axial entre les mâchoires 4, 4'.

Les mâchoires 4, 4' de la griffe de connexion 3 sont ensuite écartées axialement selon l'axe X1 de manière à permettre, d'une part, l'insertion du premier câble C1 entre les empreintes supérieures 41, 41' des mâchoires 4, 4' et, d'autre part, l'insertion du deuxième câble C2 entre les organes de blocage 45, 45' des mâchoires 4, 4' comme illustré à la figure 4.

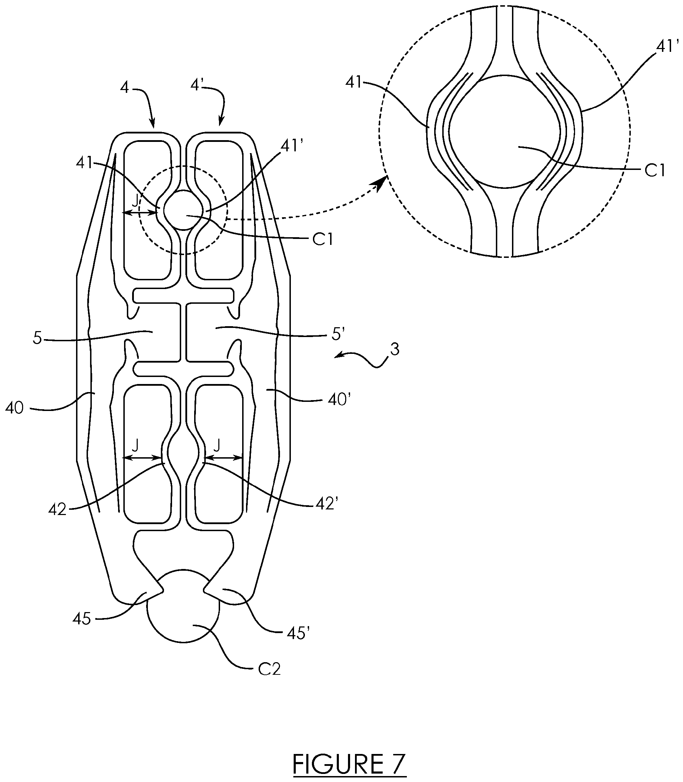

Ensuite, l'écrou de serrage 62 est serré de manière à rapprocher les mâchoires 4, 4' qui viennent bloquer le premier câble C1 entre les empreintes supérieures 41, 41'. De manière avantageuse, lors du serrage, les empreintes supérieures 41, 41' se déforment de manière plastique afin de s'adapter au diamètre du premier câble 41. En référence à la figure 7, la forme des empreintes supérieures 41, 41' est déformée par comparaison aux empreintes inférieures 42, 42'. La mâchoire 4 ne se déforme que de manière locale au niveau de ses empreintes 41, 41' en contact avec le premier câble à serrer C1.

Grâce au jeu d'écartement J ménagé entre chaque empreinte 41, 42, 41', 42' et le corps principal 40, 40' d'une mâchoire 4, 4', chaque empreinte 41, 42, 41', 42' peut se déformer pour s'adapter au diamètre du câble serré C1, C2. Autrement dit, chaque empreinte 41, 42, 41', 42' se déforme de manière à épouser de manière intime la surface extérieure d'un câble C1, C2. Plus le diamètre du câble C1, C2 est important, plus la déformation de l'empreinte 41, 42, 41', 42' est importante. Ainsi, de manière avantageuse, il existe un faible jeu de fonctionnement entre une empreinte 41, 42, 41', 42' et un câble C1, C2, ce qui permet d'améliorer la durée de vie de la griffe de connexion 3, notamment, en limitant l'impact des vibrations lors du fonctionnement.

La déformation des empreintes 41, 42, 41', 42' est limitée par les organes d'appui 5, 5' qui entrent en contact l'un contre l'autre. De manière avantageuse, la surface de contact entre les mâchoires 4, 4' et le premier câble C1 est maîtrisée indépendamment du couple serrage appliqué à la tige de liaison 6 du fait de la présence des organes d'appui 5, 5'. Le serrage des mâchoires 4, 4' est uniforme du fait de la transmission des efforts axiaux part la tige de liaison 6 de la mise en butée des organes d'appui 5, 5'.

De même, le rapprochement des mâchoires 4, 4' permet de bloquer le deuxième câble C2 en faisant coopérer les organes de blocage 45, 45' des mâchoires 4, 4' avec les rainures longitudinales du câble C2 comme illustré à la figure 7. Les câbles C1, C2 sont alors reliés physiquement et électriquement par la griffe de connexion 3.

De manière avantageuse, la griffe de connexion 3 est utilisable pour connecter des câbles C1, C2 de différentes natures (diamètres différents, présence ou non de rainure, etc.) tout en permettant un serrage uniforme. Une griffe de connexion 3 de format unique peut être fabriquée à grande échelle, ce qui en diminue le coût. De manière avantageuse, la griffe de connexion 3 comporte un nombre réduit de pièces, ce qui facilite son montage et limite son coût de fabrication.

De plus, une telle griffe de connexion 3 demeure avantageusement démontable par desserrage de l'écrou 62 los d'une opération de maintenance.

Il a été présenté précédemment une griffe de connexion 3 dont les mâchoires 4, 4' comportent une unique ouverture traversante 43. Néanmoins, il va de soi que les mâchoires 4, 4' pourraient comprendre plusieurs ouvertures traversantes 43 afin d'améliorer le contact électrique des câbles et la rigidité de la fixation. A cet effet, la griffe de connexion 3 comporte plusieurs tiges de fixation 6 pour être insérées dans les ouvertures traversantes 43. De manière préférée, les ouvertures traversantes 43 sont alignées selon l'axe latéral Y.

Il a été présenté des mâchoires 4, 4' identiques comportant des empreintes identiques 41, 41', 42, 42' mais cela pourrait ne pas être le cas. En effet, une mâchoire 4, 4' pourrait ne comporter qu'une empreinte déformable parmi les deux empreintes afin de permettre d'accueillir qu'un câble de diamètre variable. De plus, un câble pourrait être serré entre deux empreintes dont seule une des deux est déformable. Il est néanmoins préféré que les deux mâchoires 4, 4' soient identiques.

Du fait des variations thermiques dues notamment à l'environnement, la griffe de connexion 3 se dilate et se rétracte, ce qui peut entraîner un desserrage de la griffe de connexion 3. Aussi, de manière préférée, la griffe de connexion 3 comporte des moyens d'alerte visuelle configurés pour alerter visuellement un opérateur en cas de desserrage de la griffe de connexion 3.

A titre d'exemple, les moyens d'alerte visuelle peuvent se présenter sous la forme :
- d'un élément qui change de forme et/ou de couleur lorsque ledit élément a atteint une certaine température critique,
- d'un capuchon du type « poka-yoke » monté sur la tige de liaison 6 de manière à visualiser un desserrage, ou
- un élément adapté pour modifier sa forme ou sauter lors du desserrage de la griffe de connexion 3.

De manière avantageuse, lors de l'inspection visuelle de la caténaire par un opérateur, celui-ci peut détecter de manière rapide et pratique un défaut de serrage grâce aux moyens d'alerte visuelle. Une opération de maintenance peut alors être mise en œuvre rapidement, ce qui est avantageux.

## Revendications

1. Griffe de connexion (3) d'au moins deux câbles (C1, C2) comportant une première mâchoire (4), une deuxième mâchoire (4') et au moins une tige de liaison (6), s'étendant selon un axe X1, adaptée pour serrer lesdites mâchoires (4, 4') en vis-à-vis autour desdits câbles (C1, C2), la première mâchoire (4) et la deuxième mâchoire (4') étant identiques, chaque mâchoire (4, 4') comportant au moins deux empreintes de réception (41, 42, 41', 42') adaptées pour coopérer avec lesdits câbles (C1, C2) et au moins une ouverture traversante (43, 43'), s'étendant selon l'axe X1, pour permettre le passage de ladite tige de liaison (6), griffe de connexion (3) **caractérisée par le fait** les deux empreintes de réception (41, 42, 41', 42') de chaque mâchoire (4, 4') sont configurées pour se déformer lors du serrage desdites mâchoires (4, 4') autour desdits câbles (C1, C2) et par le fait que chaque mâchoire (4, 4') comporte un corps principal (40, 40') et que les deux empreintes de réception déformable (41, 42, 41', 42') sont reliées audit corps principal (40, 40') par des moyens d'écartement (44, 44') de manière à ménager un jeu d'écartement (J, J') entre lesdites empreintes de réception déformable (41, 42, 41', 42') et ledit corps principal (40, 40').

2. Griffe de connexion (3) selon la revendication 1, dans laquelle ladite empreinte de réception (41, 42, 41', 42') est configurée pour se déformer plastiquement lors du serrage desdites mâchoires (4, 4') autour desdits câbles (C1, C2).

3. Griffe de connexion (3) selon l'une des revendications 1 à 2, dans laquelle chaque mâchoire (4, 4') comporte un organe d'appui (5, 5') et lesdits organes d'appui (5, 5') sont configurés pour entrer en butée l'un contre l'autre lors du serrage desdites mâchoires (4, 4') autour desdits câbles (C1, C2).

4. Griffe de connexion (3) selon la revendication précédente, dans laquelle l'ouverture traversante (43, 43') d'une mâchoire (4, 4') s'étend dans l'organe d'appui (5, 5') de ladite mâchoire (4, 4').

5. Griffe de connexion (3) selon l'une des revendications précédentes, dans laquelle, chaque mâchoire (4, 4') comporte au moins un organe de blocage (45, 45') adapté pour coopérer avec une rainure d'un câble (C1, C2).

6. Ensemble d'une griffe de connexion (3) selon l'une des revendications 1 à 5 et de deux câbles (C1, C2), les câbles (C1, C2) étant serrés entre les deux mâchoires (4, 4'), au moins une empreinte de réception (41, 42, 41', 42') d'au moins une mâchoire (4, 4') étant déformée par la réception d'un câble (C1, C2).

## Patentansprüche

1. Schuh zum Anschließen (3) von mindestens zwei Kabeln (C1, C2), aufweisend eine erste Backe (4), eine zweite Backe (4') und mindestens eine Verbindungsstange (6), die sich gemäß einer Achse X1 erstreckt, die zum Spannen der Backen (4, 4') gegenüberliegend um die Kabel (C1, C2) geeignet ist, wobei die erste Backe (4) und die zweite Backe (4') identisch sind, wobei jede Backe (4, 4') mindestens zwei Aufnahmeprägungen (41, 42, 41', 42') aufweist, die zum Zusammenwirken mit den Kabeln (C1, C2) geeignet sind, und mindestens eine Durchgangsöffnung (43, 43'), die sich gemäß der Achse X1 erstreckt, um den Durchgang der Verbindungsstange (6) zu gestatten, wobei der Schuh zum Anschließen (3) **dadurch gekennzeichnet ist, dass** die zwei Aufnahmeprägungen (41, 42, 41', 42') jeder Backe (4, 4') konfiguriert sind, um sich beim Spannen der Backen (4, 4') um die Kabel (C1, C2) zu verformen und dadurch, dass jede Backe (4, 4') einen Hauptkörper (40, 40') aufweist und dass die zwei verformbaren Aufnahmeprägungen (41, 42, 41', 42') mit dem Hauptkörper (40, 40') durch Beabstandungsmittel (44, 44') derart verbunden sind, dass ein Beabstandungsspiel (J, J') zwischen den verformbaren Aufnahmeprägungen (41, 42, 41', 42') und dem Hauptkörper (40, 40') eingerichtet ist.

2. Schuh zum Anschließen (3) nach Anspruch 1, wobei die Aufnahmeprägung (41, 42, 41', 42') konfiguriert ist, um sich beim Spannen der Backen (4, 4') um die Kabel (C1, C2) plastisch zu verformen.

3. Schuh zum Anschließen (3) nach einem der Ansprüche 1 bis 2, wobei jede Backe (4, 4') ein Stützorgan (5, 5') aufweist und die Stützorgane (5, 5') konfiguriert sind, um beim Spannen der Backen (4, 4') um die Kabel (C1, C2) aneinander anzuschlagen.

4. Schuh zum Anschließen (3) nach vorangehendem Anspruch, wobei sich die Durchgangsöffnung (43, 43') einer Backe (4, 4') im Stützorgan (5, 5') der Backe (4, 4') erstreckt.

5. Schuh zum Anschließen (3) nach einem der vorangehenden Ansprüche, wobei jede Backe (4, 4') mindestens eine Blockiereinrichtung (45, 45') aufweist, die zum Zusammenwirken mit einer Rille eines Kabels (C1, C2) geeignet ist.

6. Einheit aus einem Schuh zum Anschließen (3) nach einem der Ansprüche 1 bis 5 und zwei Kabeln (C1, C2), wobei die Kabel (C1, C2) zwischen den zwei Backen (4, 4') gespannt sind, wobei mindestens eine Aufnahmeprägung (41, 42, 41', 42') mindestens einer Backe (4, 4') durch die Aufnahme eines Kabels (C1, C2) verformt wird.

## Claims

1. A connecting claw (3) for connecting at least two cables (C1, C2) including a first jaw (4), a second jaw (4') and at least one connecting shank (6), extending along an axis X1, adapted to clamp said jaws (4, 4') facing each other around said cables (C1, C2), the first jaw (4) and the second jaw (4') being identical, each jaw (4, 4') including at least two accommodating cavities (41, 42, 41', 42') adapted to cooperate with said cables (C1, C2) and at least one through opening (43, 43'), extending along the axis X1, to enable said connecting shank (6) to pass therethrough, which connecting claw (3) is **characterized in that** both accommodating cavities (41, 42, 41', 42') of each jaw (4, 4') are configured to deform upon clamping said jaws (4, 4') around said cables (C1, C2) and **in that** each jaw (4, 4') includes a main body (40, 40') and that both deformable accommodating cavities (41, 42, 41', 42') are connected to said main body (40, 40') by spacing means (44, 44') so as to provide a spacing clearance (J, J') between said deformable accommodating cavities (41, 42, 41', 42') and said main body (40, 40').

2. The connecting claw (3) according to claim 1, wherein said accommodating cavity (41, 42, 41', 42') is configured to plastically deform upon clamping said jaws (4, 4') around said cables (C1, C2).

3. The connecting claw (3) according to one of claims 1 to 2, wherein each jaw (4, 4') includes a bearing member (5, 5') and said bearing members (5, 5') are configured to abut against each other upon clamping said jaws (4, 4') around said cables (C1, C2).

4. The connecting claw (3) according to the previous claim, wherein the through opening (43, 43') of a jaw (4, 4') extends in the bearing member (5, 5') of said jaw (4, 4').

5. The connecting claw (3) according to one of the previous claims, wherein, each jaw (4, 4') includes at least one locking member (45, 45') adapted to cooperate with a groove of a cable (C1, C2).

6. An assembly of a connecting claw (3) according to one of claims 1 to 5 and of two cables (C1, C2), the cables (C1, C2) being clamped between both jaws (4, 4'), at least one accommodating cavity (41, 42, 41', 42') of at least one jaw (4, 4') being deformed by accommodating a cable (C1, C2).
